# DEMANDE DE BREVET EUROPEEN

(11) **EP 4 764 037 A1**
(43) Date de publication de la demande: **24.06.2026**
(21) Numéro de dépôt: 25212065.4
(22) Date de dépôt: 29.10.2025
(51) Int. Cl.: C25D 7/00, C25D 15/00, G04B 15/14

(54) **PROCÉDÉ DE DÉPÔT PAR VOIE HUMIDE D'UN REVÊTEMENT COMPOSITE À MATRICE MÉTALLIQUE SUR UNE PIÈCE SUPPORT**

(30) Priorité: 19.12.2024 EP 24221877
(71) Demandeur: The Swatch Group Research and Development Ltd, 2074 Marin-Epagnier (CH)
(72) Inventeur: VINCENT, Christophe, 25160 Montperreux (FR); CORDONNIER, Thomas, 25130 Villers-le-Lac (FR)
(74) Mandataire: ICB SA

(57) **Abrégé**

Un aspect de l'invention concerne un procédé de dépôt d'un revêtement composite à matrice métallique sur une pièce support, comprenant les étapes consistant à immerger la pièce support à revêtir dans un bain électrolytique contenant le métal à déposer (50), puis à procéder au dépôt du métal en couche sur la pièce support à revêtir par électrodéposition (60), caractérisé en ce que, préalablement à l'immersion de la pièce support à revêtir dans le bain électrolytique, un matériau bidimensionnel est incorporé et dispersé dans le bain électrolytique (30) en une quantité déterminée pour répartir de manière homogène le matériau bidimensionnel dans l'épaisseur de la matrice métallique constituée par le métal déposé en couche.

## Description

### Domaine technique de l'invention

L'invention concerne le dépôt par voie humide d'un revêtement sur une pièce support ou substrat tel qu'un composant horloger.

L'invention concerne plus particulièrement un procédé de dépôt d'un revêtement composite à matrice métallique sur une pièce support, comprenant les étapes consistant à immerger la pièce support à revêtir dans un bain électrolytique contenant le métal à déposer, puis à procéder au dépôt du métal en couche sur la pièce support à revêtir par électrodéposition.

Le procédé est destiné notamment, mais non exclusivement, à être mis en œuvre pour revêtir des pièces d'horlogerie. Les pièces d'horlogerie concernées sont notamment, mais non exclusivement, des pièces destinées à être en contact par frottement avec une autre pièce d'horlogerie, comme par exemple une roue d'échappement, un axe, un engrenage, etc.

### Arrière-plan technologique

Dans les mécanismes d'horlogerie, de nombreuses pièces en mouvement entrent en contact les unes avec les autres, générant des frottements. De tels frottements provoquent l'usure des pièces, augmentent la consommation d'énergie nécessaire au déplacement des pièces et ralentissent le mouvement, affectant la précision ainsi que l'autonomie du mécanisme. Il est donc essentiel de réduire les frottements autant que possible afin d'assurer le bon fonctionnement du mouvement horloger.

Afin de réduire ces frottements, il est connu de lubrifier les mécanismes d'horlogerie à l'aide de lubrifiants liquides (huiles) ou pâteux (graisses) utilisés sur des zones spécifiques et en quantités adaptées. L'inconvénient de tels lubrifiants est le risque qu'ils s'échappent des zones sur lesquelles ils ont été déposés. De plus, leur comportement peut être fortement influencé par les conditions environnementales, telles que la température et l'humidité, qui peuvent affecter leur viscosité. Par ailleurs, cette méthode de lubrification n'est pas définitive : elle nécessite une révision, le lubrifiant ayant pu s'assécher ou bien être contaminé par des débris d'usure, rendant une relubrification indispensable après quelques années.

Afin de palier l'inconvénient des lubrifiants liquides ou pâteux, des solutions de lubrification à sec ont été mises au point, notamment par le dépôt de revêtements à lubrifaction sèche. Ces revêtements à lubrification sèche présentent l'avantage d'être solidaires des pièces à protéger, limitant ainsi le risque de perte, tout en offrant une meilleure résistance à la dégradation chimique et une sensibilité réduite aux conditions environnementales. Parmi les revêtements à lubrification sèche, il peut être cité les revêtements à base de nanotubes de carbone dispersés dans une matrice de nickel, ainsi que les revêtements à base de nickel et Polytetrafluoroethylene (PFTE). De tels revêtements sont par exemple décrits dans les demandes de brevet US20081323475 et EP4390556.

Bien que les solutions de lubrification à sec présentent des améliorations par rapport aux lubrifiants liquides ou pâteux, elles restent perfectibles par rapport à la problématique des frottements, et l'amélioration des propriétés tribologiques, en particulier la réduction du frottement à sec et la résistance à l'usure, est toujours recherchée.

L'invention a pour but de proposer un procédé de dépôt d'un revêtement sur une pièce support permettant d'améliorer les propriétés tribologiques de la pièce support ainsi revêtue, notamment en offrant un coefficient de frottement plus faible et une résistance à l'usure améliorées.

L'invention a également pour objet de proposer une pièce d'horlogerie destinée à être en contact par frottement avec une autre pièce d'horlogerie, ayant des propriétés tribologiques améliorées, et notamment offrant un coefficient de frottement réduit et une résistance à l'usure améliorée.

### Résumé de l'invention

L'invention concerne un procédé de dépôt d'un revêtement composite à matrice métallique sur une pièce support, comprenant les étapes consistant à immerger la pièce support à revêtir dans un bain électrolytique contenant le métal à déposer, puis à procéder au dépôt du métal en couche sur la pièce support à revêtir par électrodéposition, le procédé étant remarquable en ce que, préalablement à l'immersion de la pièce support à revêtir dans le bain électrolytique, un matériau bidimensionnel est incorporé et dispersé dans le bain électrolytique en une quantité déterminée pour répartir de manière homogène le matériau bidimensionnel dans l'épaisseur de la matrice métallique constituée par le métal déposé en couche.

De préférence, le matériau bidimensionnel est choisi dans la famille des MXenes, de formule générale Mₙ₊₁XₙTₓ, où :
- n= 1 à 3 et
- « M » est un métal de transition choisi dans le groupe comprenant le titane, le vanadium, le chrome, l'yttrium, le zirconium, le nobium, le molybdène, l'hafnium, le tantale ou le tungstène,
- « X » est du carbone ou de l'azote, et
- « T » est une terminaison de surface comprenant de l'oxygène, de l'hydrogène, du chlore, du fluor ou une combinaison de ces composés. « X » étant une variable entière dépendant de la terminaison de surface « T ».

Selon le procédé d'exfoliation des feuilles choisi, la terminaison de la surface Tₓ peut être omise. Das ce cas le matériau bidimensionnel est choisi dans la famille des MXenes, de formule générale Mₙ₊₁Xₙ.L'ajout de MXenes a pour avantage d'améliorer les propriétés tribologiques de la pièce support du fait des effets de sa structure elle-même (glissement des couches entre elles qui limitent le frottement) mais également la terminaison du MXene. Il peut également se produire des réactions tribochimiques avec le lubrifiant et les matières frottantes permettant de limiter l'usure.

Avantageusement, les MXenes sont incorporés dans le bain électrolytique sous forme de feuillets individuels ou agglomérés.

Avantageusement, il peut être prévu, préalablement à l'incorporation du matériau bidimensionnel dans le bain électrolytique, l'incorporation d'au moins un agent tensioactif dans le bain électrolytique.

Avantageusement, le bain électrolytique additionné du matériau bidimensionnel est soumis à une opération d'ultra-sonication.

Avantageusement, la pièce support sur laquelle le revêtement est déposé est une pièce d'horlogerie.

Un autre aspect de l'invention concerne une pièce d'horlogerie destinée à venir en contact par frottement avec une surface de contact d'une autre pièce d'horlogerie, caractérisée en ce qu'elle comprend un revêtement formé d'un composite comprenant une matrice métallique additivé d'un matériau bidimensionnel.

Avantageusement, le matériau bidimensionnel est choisi dans la famille des MXenes ayant la formule générale Mₙ₊₁XₙTₓ, où :
- n = 1 à 3,
- « M » est un métal de transition choisi dans le groupe comprenant le titane, le vanadium, le chrome, l'yttrium, le zirconium, le nobium, le molybdène, l'hafnium, le tantale ou le tungstène,
- « X » est du carbone ou de l'azote, et
- « T » est une terminaison de surface comprenant de l'oxygène, de l'hydrogène, du chlore, du fluor ou une combinaison de ces composés. « X » étant une variable entière dépendant de la terminaison de surface « T ».
Selon le procédé d'exfoliation des feuilles choisi, la terminaison de la surface Tₓ peut être omise. Das ce cas le matériau bidimensionnel est choisi dans la famille des MXenes, de formule générale Mₙ₊₁Xₙ.

Avantageusement, le MXenes choisi est du Ti₃C₂.

Avantageusement, la matrice métallique est une matrice à base de nickel.

### Brève description des figures

D'autres caractéristiques et avantages de l'invention ressortiront de la description détaillée de l'invention qui va suivre, donnée à titre d'exemple et faite en référence aux figures annexées dans lesquelles :
- la figure 1 représente les étapes de dépôt d'un revêtement composite à matrice métallique suivant un exemple de réalisation du procédé de dépôt selon l'invention,
- la figure 2 illustre un graphique représentant le coefficient de frottement dynamique moyen de différents échantillons testés dans des conditions spécifiques (longue amplitude),
- la figure 3 illustre un graphique représentant le coefficient de frottement dynamique moyen de différents échantillons testés dans des conditions spécifiques (courte amplitude).

### Description détaillée de l'invention

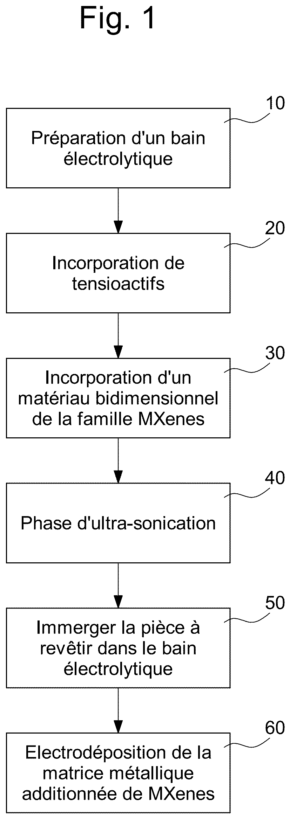

La figure 1 illustre une représentation schématique des étapes de dépôt d'un revêtement composite à matrice métallique sur une pièce support suivant un exemple de réalisation du procédé selon l'invention.

Dans l'exemple qui va être décrit, le composite revêtant la pièce support est formé de nickel (matrice) et d'un matériau bidimensionnel (2D) choisi dans la famille des MXenes ayant la formule générale Mₙ₊₁XₙTₓ, où :
- n = 1 à 3,
- « M » est un métal de transition choisi dans le groupe comprenant le titane, le vanadium, le chrome, l'yttrium, le zirconium, le nobium, le molybdène, l'hafnium, le tantale ou le tungstène,
- « X » est du carbone ou de l'azote, et
- « T » est une terminaison de surface comprenant de l'oxygène, de l'hydrogène, du chlore, du fluor ou une combinaison de ces composés. « X » étant une variable entière dépendant de la terminaison de surface « T ».
Selon le procédé d'exfoliation des feuilles choisi, la terminaison de la surface Tₓ peut être omise. Das ce cas le matériau bidimensionnel est choisi dans la famille des MXenes, de formule générale Mₙ₊₁Xₙ.

Les MXenes contenus dans le composite sont ainsi composés de « n+1 », avec n=1 à 3, couches d'un métal de transition noté « M » qui peut être l'un des métaux susmentionnés, lesdites couches de métaux étant séparées par « n » couches de carbone ou d'azote, « T » représentant des groupes fonctionnels permettant d'ajuster les propriétés de surface du MXene.

Pour réaliser le dépôt du revêtement composite à matrice métallique, on procède en premier lieu à la préparation du bain électrolytique, de préférence galvanique, permettant de réduire le métal (dans l'exemple le nickel) sur la pièce support (étape 10). Le bain électrolytique consiste en une solution dans laquelle les MXenes vont être incorporés, la solution contenant notamment le métal à déposer, des électrolytes pour la conduction du courant électrique dans le bain et un solvant (eau).

Préalablement à l'incorporation des MXenes, il peut être avantageusement prévu d'ajouter au bain électrolytique au moins un agent tensioactif (étape 20). Les agents tensioactifs ont pour fonction de charger les feuillets de MXenes en surface. Ces charges de surface ont pour fonction d'une part d'empêcher les feuillets de MXenes de se réagglomérer une fois séparés selon des principes de répulsion électrostatique et stérique, assurant ainsi la stabilité de la suspension, et d'autre part de permettre une incorporation homogène et suffisante de ces feuillets dans la matrice par électrophorèse.

Une fois les tensioactifs ajoutés, les MXenes sont incorporés en feuillets simples (individuels) ou agglomérés dans le bain électrolytique en une quantité suffisante pour assurer une répartition homogène des feuillets dans l'épaisseur du dépôt (étape 30).

Pour incorporer des feuillets simples non agglomérés ou des feuillets agglomérés, une phase d'ultra-sonication dans la solution (étape 40) est nécessaire ou du moins préférable. Les ondes sonores vont en effet permettre une séparation mécanique totale des feuillets groupés en feuillets simples, une légère agglomération des feuillets simples pouvant être possible lors de la mise en solution. On préférera incorporer des feuillets non agglomérés. Une fois les feuillets séparés, les tensioactifs vont se fixer à la surface de ces derniers, conférant les avantages de stabilité et de mobilité électrophorétique décrits plus haut.

Une fois les MXenes stabilisés, la pièce support à revêtir est immergée dans le bain électrolytique additivé de MXenes (étape 50).

Le dépôt composite à matrice métallique est ensuite réalisé (étape 60). Un tel dépôt peut être réalisé dans les mêmes conditions qu'un dépôt réalisé dans un bain électrolytique « classique », à savoir non additivé, mais aussi dans un bain auquel sont ajoutés des affineurs de grains ou encore des agents nivelant, et quelle que soit la méthode d'électrodéposition utilisée (courant continu, pulsé, etc.).

Des tests tribologiques comparatifs entre des échantillons d'acier revêtu d'un composite Nickel/MXenes obtenu suivant le procédé précédemment décrit et un échantillon d'acier revêtu de nickel à l'image de ce qui peut être retrouvé sur une pièce horlogère de type roue d'échappement - c'est-à-dire sans adjonction de MXenes - ont été réalisés. Les conditions d'essai correspondent au contact horloger de l'échappement à ancre suisse en termes d'effort et de vitesse et sans ajout de lubrifiant au contact.

Les tests ont été effectués avec un tribomètre bille/plan, la bille étant réalisée avec un antagoniste typique de l'horlogerie (dans l'exemple le rubis) et le plan étant revêtu du dépôt composite à tester ou d'un dépôt de nickel à l'image de ce qui peut être retrouvé sur une pièce horlogère de type roue d'échappement. Les tests ont été séparés entre de longues ou courtes amplitudes pour solliciter soit le dépôt soit l'antagoniste de manière privilégiée. Le MXene utilisé lors de ces tests est le Ti₃C₂.

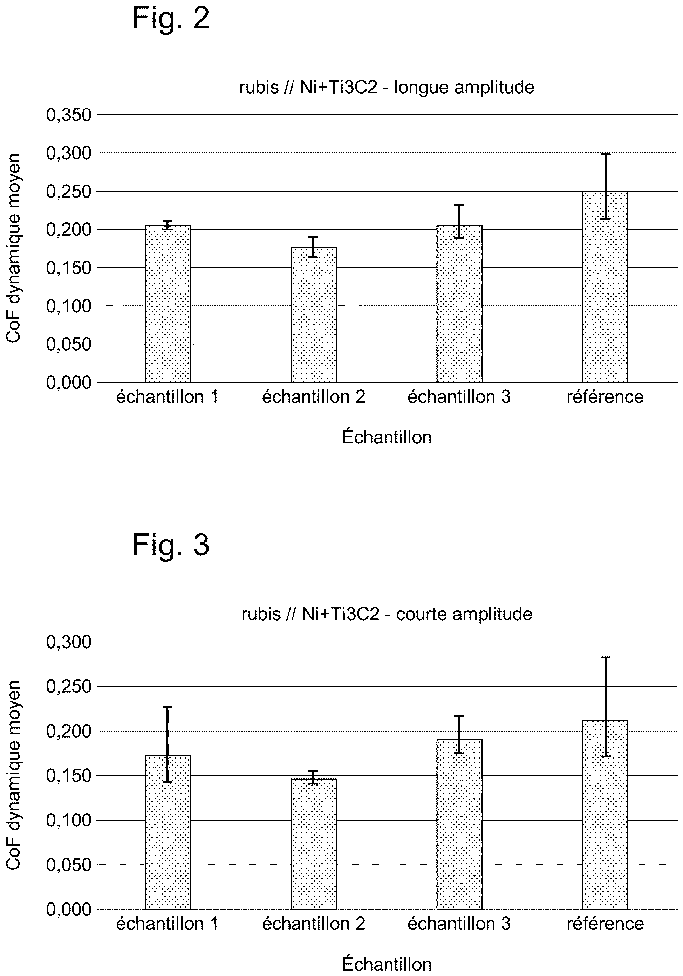

Les résultats sont présentés sur la figure 2 (longue amplitude) et la figure 3 (courte amplitude).

Ainsi, trois échantillons revêtus d'un revêtement d'un dépôt composite à matrice métallique, Nickel et Ti₃C₂, et identifiés sous les désignations « échantillon 1 », « échantillon 2 », « échantillon 3 », obtenus selon le procédé précédemment décrit, ont été testés tribologiquement sur tribomètre. Les 3 échantillons correspondent à des temps de dépôt croissants donc à une épaisseur croissante. L' « échantillon 1 » correspond à une épaisseur de 1µm, l' « échantillon 2 » à 5 µm et l' « échantillon 3 » à 10 µm. Comme précisé précédemment, le contact est réalisé entre une bille en rubis et un plan revêtu d'un dépôt de composite nickel/Ti₃C₂. La comparaison a été faite avec un quatrième échantillon d'acier revêtu de nickel sans addition de MXenes, à l'image de ce qui peut être retrouvé sur une pièce horlogère de type roue d'échappement. Le quatrième échantillon est identifié sous la désignation « référence ».

Les lignes verticales représentées sur chacune des barres indiquent la variabilité dans les mesures.

Qu'il s'agisse de longues ou courtes amplitudes appliquées, l'échantillon « référence » présente une valeur de coefficient de frottement dynamique moyen (CoF) plus élevée (de l'ordre de 0,25 dans le cas de longue amplitude et de l'ordre de 0,21 dans le cas de courte amplitude), avec une variabilité plus importante que celle des échantillons « échantillon 1 » à « échantillon 3 ».

Les échantillons contenant le dépôt nickel/Ti₃C₂ présentent donc des coefficients de frottement dynamique moyens inférieurs à ceux de la référence, indiquant une meilleure performance de ces matériaux dans la réduction du frottement. L'échantillon « échantillon 2 » est le plus performant avec un CoF moyen le plus bas et une variabilité limitée.

Les résultats montrent donc un gain du coefficient de frottement des trois échantillons selon l'invention (« échantillon 1 » à « échantillon 3 ») par rapport à l'échantillon « référence ». Par ailleurs, en terme d'usure, sur un nombre de cycles relativement faible (3000 cycles), il n'est apparu aucun débris sur le rubis ou le revêtement.

Les essais tribologiques ont montré que l'ajout de MXenes, en l'espèce du Ti₃C₂ dans une matrice métallique, et notamment dans une matrice de nickel, permet d'améliorer les performances de contact à sec dans le cas de pièces d'horlogerie avec une baisse du coefficient dynamique moyen de frottement par rapport à un revêtement de nickel dépourvu de MXenes, et ce sans altérer l'usure du contact.

L'invention est décrite dans ce qui précède à titre d'exemple. Il est entendu que l'homme du métier est à même de réaliser différentes variantes de réalisation de l'invention sans pour autant sortir du cadre de l'invention.

### Nomenclature

- 10 :: Préparation d'un bain électrolytique
- 20 :: Incorporation de tensioactifs
- 30 :: Incorporation d'un matériau bidimensionnel de la famille des MXenes
- 40 :: Phase d'ultra-sonication
- 50 :: Immersion de la pièce support à revêtir dans le bain électrolytique
- 60 :: Electro-déposition de la matrice métallique additionnée de MXenes

## Revendications

1. Procédé de dépôt d'un revêtement composite à matrice métallique sur une pièce d'un mouvement horloger, comprenant les étapes consistant à immerger la pièce support à revêtir dans un bain électrolytique contenant le métal à déposer (50), puis à procéder au dépôt du métal en couche sur la pièce support à revêtir par électrodéposition (60), **caractérisé en ce que**, préalablement à l'immersion de la pièce support à revêtir dans le bain électrolytique, un matériau bidimensionnel est incorporé et dispersé dans le bain électrolytique (30) en une quantité déterminée pour répartir de manière homogène le matériau bidimensionnel dans l'épaisseur de la matrice métallique constituée par le métal déposé en couche dans lequel le matériau bidimensionnel est choisi dans la famille des MXenes, de formule générale Mₙ₊₁XₙTₓ, où :
- n= 1 à 3 et
- « M » est un métal de transition choisi dans le groupe comprenant le titane, le vanadium, le chrome, l'yttrium, le zirconium, le nobium, le molybdène, l'hafnium, le tantale ou le tungstène,
- « X » est du carbone ou de l'azote, et
- « T » est une terminaison de surface comprenant de l'oxygène, de l'hydrogène, du chlore, du fluor ou une combinaison de ces composés et dans lequel les MXenes sont présents sous la forme de feuillets individuels/simples.

2. Procédé de dépôt d'un revêtement composite métallique selon la revendication 2, **caractérisé en ce que** les MXenes sont incorporés dans le bain électrolytique sous forme de feuillets individuels ou agglomérés.

3. Procédé de dépôt d'un revêtement composite métallique selon l'une quelconque des revendications 1 à 2, **caractérisé en ce que**, préalablement à l'incorporation du matériau bidimensionnel dans le bain électrolytique, au moins un agent tensioactif est incorporé dans le bain électrolytique (20).

4. Procédé de dépôt d'un revêtement composite métallique selon l'une quelconque des revendications 1 à 3, **caractérisé en ce que** le bain électrolytique additionné du matériau bidimensionnel est soumis à une opération d'ultra-sonication (40).

5. Pièce d'horlogerie destinée à venir en contact par frottement avec une surface de contact d'une autre pièce d'horlogerie, **caractérisée en ce qu'**elle comprend un revêtement formé d'un composite comprenant une matrice métallique additivé d'un matériau bidimensionnel.

6. Pièce d'horlogerie selon la revendication 5, **caractérisée en ce que** le matériau bidimensionnel est choisi dans la famille des MXenes ayant la formule générale Mₙ₊₁XₙTₓ, où :
- n = 1 à 3,
- « M » est un métal de transition choisi dans le groupe comprenant le titane, le vanadium, le chrome, l'yttrium, le zirconium, le nobium, le molybdène, l'hafnium, le tantale ou le tungstène,
- « X » est du carbone ou de l'azote, et
- « T » est une terminaison de surface comprenant de l'oxygène, de l'hydrogène, du chlore, du fluor ou une combinaison de ces composés.

7. Pièce d'horlogerie selon la revendication 5 ou la revendication 6, **caractérisée en ce que** le MXene choisi est du Ti₃C₂.

8. Pièce d'horlogerie selon l'une quelconque des revendications 5 à 7, **caractérisée en ce que** la matrice métallique est une matrice base nickel.
